# EUROPEAN PATENT SPECIFICATION

(11) **EP 1 973 666 B1**
(45) Date of publication and mention of the grant of the patent: **13.03.2013**
(21) Application number: 06747925.3
(22) Date of filing: 16.06.2006
(51) Int. Cl.: B03C 3/30, B03C 3/82, B03C 3/86

(54) **AN AIR FILTER AND A METHOD FOR MANUFACTURING SUCH AN AIR FILTER**
LUFTFILTER UND VERFAHREN ZUR HERSTELLUNG SOLCH EINES LUFTFILTERS
FILTRE À AIR ET PROCÉDÉ DE FABRICATION DE CELUI-CI

(30) Priority: 13.01.2006 SE 0600053
(43) Date of publication of application: 01.10.2008
(73) Proprietor: Zehnder Group Nordic AB, 187 13 Täby (SE)
(72) Inventor: BERGSTRÖM, Lars-Göran, S-645 42 Strängnäs (SE)
(74) Representative: Berglund, Stefan
(86) International application number: PCT/SE2006/000733
(87) International publication number: WO 2007/081251

(56) References cited:
- EP-A1- 1 232 781
- WO-A1-00/07732
- WO-A1-01/39889
- WO-A1-01/49391
- WO-A1-02/24306
- WO-A1-96/24760
- DE-C- 292 621
- FR-A1- 2 461 514
- US-A- 5 273 560

## Description

### BACKGROUND OF THE INVENTION AND PRIOR ART

The present invention relates to an air filter, which comprises a fitter frame with passages for air which is adapted to be attached inside a channel-shaped element, and a filter body, which, comprises a plurality of curtains of electrostatically chargeable fibres, which are attached to the filter frame such that the filter body obtains an extern sion from the filter frame to a position located at a distance from and downstream the filter frame with respect to the intended flow direction of the air through the air filter.

An air filter of the kind which here is mentioned is mounted in passages through which air flows. Such passages may be horizontally or vertically orientated and consists of airflow channels which are included in a ventilation system. Consequently, such an air filter comprises a filter body with a plurality of curtains of electrostatically chargeable fibres which separate particles from the air both by mechanical and electrostatical action. Such an air filter may thereby clean the air from both large and microscopically small particles.

A problem with such filters which are mounted in horizontally orientated passages, it is that the filter body with the time tends to collapse. Thus, the air, which especially flows through an upper portion of the air fitter, obtains a decreased filtering.

By WO98/53914 it is known to manufacture air filters with a filter body consisting of elongated flexible fibres which, at an end, are attached on a filter frame. Such a filter frame may be comprised of a plurality of rectangular distance elements which have two elongated sidewalls arranged in parallel and which are connected by transverse partition walls. Thus, each of the elongated distance elements provides delimited cells which consist of inlet openings for the air flowing through the filter. One or several partition walls are here arranged on suitable places between the distance elements such that the existing filter body is divided in a plurality of separate parts which each is arranged in a flow channel. Thus, the partition walls provide inner support surfaces for the filter body such that it is prevented from collapsing. However, applying such partition walls on suitable places between adjacent distance elements, makes the manufacturing process of the air filter more complicated and more expansive. Furthermore, a certain collapsing of the filter body in the respective flow-channels is provided.

### SUMMARY OF THE INVENTION

The object of the present invention is to provide an air filter of the initially mentioned kind where the problem, with a collapsed filter body when the air filter is arranged in horizontally oriented air passages, is solved in a manner which does not make the manufacturing of the air filter substantially more expensive.

This object is achieved with the air filter defined in claim 1. When a conventional air filter with a filter body according to the above is arranged in a horizontally oriented air channel, a collapse of the filter body is obtained mainly at an upper portion of the filter body. Thus, it is enough to attach substantially the upper portion of the filter body against an inner surface of the channel shaped element. By doing that, the upper portion of the filter body is maintained in an intended position in relation to the channel-shaped element. Thus, the filter body is prevented from collapsing downwards in a simple and effective manner. However, it can be practical to attach a surrounding peripheral portion of the filter body against a corresponding surrounding inner surface of the channel-shaped element. Thus, the air filter does not need to be provided with a marking or the like which indicates which portion of the air filter has to be directed upwards when the air filter is mounted in a horizontal air passages The attachment of the peripheral fibres of the filter body against an inner surface of the tubular element may be performed in a fairly simple manner with a plurality of different attachment means. Thus, a horizontally oriented air filter may be provided where the problem with a collapsed filter body is eliminated without the cost for manufacturing the air filter having been substantially increased.

According to the invention, said attachment mean are adapted to attach fibres in said peripheral portion of the filter body against the wall surface of the channel shaped element in a position which is located nearer the downstream position of the filter body than the attachment position of the filter body in the filter frame. The collapse of the filter body of a conventional air filter of this kind increases successively with the distance from the attachment position of the filter body in the filter frame. Thus, it is suitable to apply said attachment means at a relatively large distance from the filter frame. Said attachment means may be a double-faced tape. To use a double-faced tape for attaching said fibres against the channel-shaped element is a very simple but effective manner to prevent the collapsing of the filter body Alternatively, said attachment means may be a glue. A glue, such as, for example, a melt glue, can simply be applied on the inner surface the channel-shaped element in a desired position, for example, in form of one or several glue strings. Thereby, the peripheral fibres of the filter body are attached in the desired position against the inner surface of the channel-shaped element. According to a further alternative, said attachment means may be a weld joint. In the cases that the fibres of the filter body and the channel-shaped element are manufactured of materials which can be welded together, a very strong and suitable connection between the peripheral fibres of the filter body and the inner wall surface of the channel-shaped element can here be obtained.

According to a preferred embodiment of the present invention, the fibres of the filter body have substantially uniform length. Thereby, a substantially uniform filtering of the air which flows through different cross sections of the filter body is obtained. Advantageously, the channel-shaped elements may consist of a channel-shaped casing which consists of a part of the air filter. An air filter with such a chanel-shaped casing which surrounds the filter frame and the filter body consists of a connected unit which relatively easy can be attached in an air channel. Alternatively, the channel-shaped element may consist of a part of an existing air channel in which an air filter in form of a filter frame with attached filter body is mounted. Advantageously, the channel-shaped casing has an extension which at least corresponds the total extension of the filter frame and the filter body in. the intended flow direction of the air. Thereby the channel-shaped casing may enclose the filter frame and the whole filter body. By doing that, air is prevented from flowing out on the side of the filter body. Thus, all air is forced to flow along the whole filter body.

According to a further preferred embodiment of present invention, a filter frame is formed by a plurality of side by side mounted elongated distance elements. It is preferred from a production technical point of view to form filter frames by such distance elements. At the same time, a very even distribution of the fibres can here be obtained in all cross sections of the filter body. The filter frame may have a substantially round contour shape in that two peripheral and diametrically opposite distance elements are shorter than the remaining distance elements and that the side by side mounted distance elements have a length which increases successively in the direction towards the centre of the filter frame. In many cases it is desired that the air filter is mounted in an air channel with as round cross section. Thus, the mounting of the air filter is facilitated if the filter frame has a corresponding round contour shape. The inner surface of the channel-shaped casing has thus advantageously a round contour shape.

A method according to the invention is defined in claim 10.

### BRIEF DESCRIPTION OF THE DRAWINGS

In the following, a preferred embodiment of the invention is described as an example with reference to the attached drawings, in which:

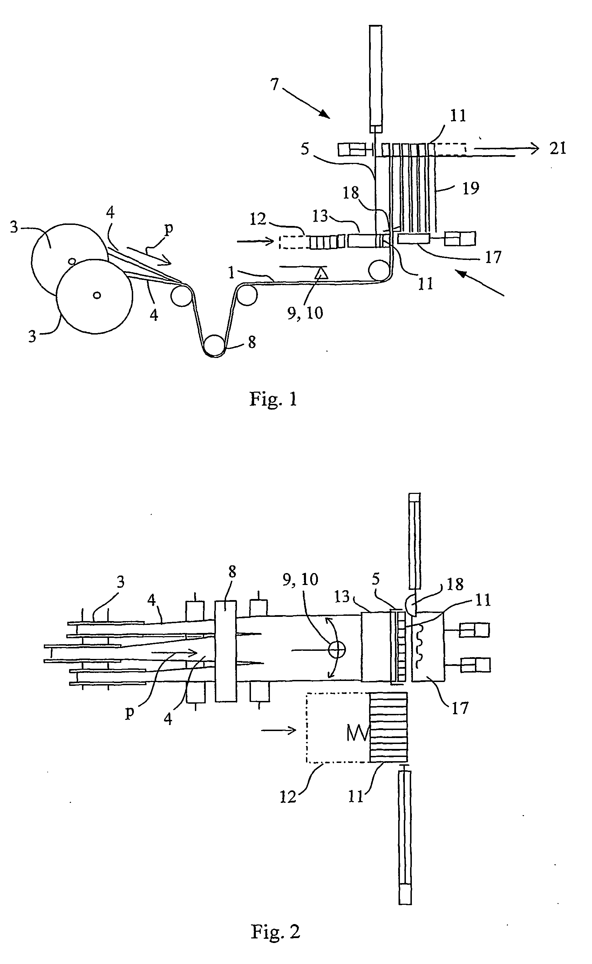

Fig 1 shows a side projection of a production line for manufacturing of an air filter according to the invention,
Fig 2 shows a horizontal projection of the arrangement in Fig 1 with a packing station included in Fig 1 removed for the sake of clarity,
Fig 3 shows a side projection of a punching step included in the production line,
Fig 4 shows a horizontal projection of the arrangement in Fig 3 with a punch included in Fig 3 removed for the sake of clarity,
Fig 5 shows a broken out end portion of a distance element included in an air filter with attached fibre curtain,
Fig 6 shows a broken out cross-section of an air filter at punching,
Fig 7 shows a broken out cross-section through an air filter with surrounding tubular casing,
Fig 8 shows a round filter frame with attached filter body in a perspective view,
Fig 9 shows a casing adapted for fitting of the round frame in Fig 8, likewise in perspective, and
Fig 10 shows a perspective view of casing with filter frame fitted therein.

### DETAILED DESCRIPTION OF A PREFERRED EMBODIMENT OF THE INVENTION

In the following description of the invention these are denominations which meaning, in this connection, are explained below:
With "round" cross-section is meant at first hand a circular round cross-section, which is not to be understood as excluding cross-sections which differ from the perfect circle since the invention also can be used for manufacturing of filter with, for example, oval and elliptic cross-sections, or for manufacturing of polygonal filters with rounded corners.
With "filter-frame" is meant a fixed grouping of the inlet openings of the filter in a number of sub-openings, which can be defined by longitudinal and transverse partition walls. With "filter body" is meant a member comprising fibres and/or fibre tows, the main extension of which is in a flow direction, and which preferably are substantially equally divided over the cross-section area of the filter.
With "fibre tow" is meant a bundle of thin fibres which are loosely plated together to a splittable tow.
With "fibre" is meant the individual smallest part included in a fibre tow.

One suitable fibre for the filter of the invention is a synthetic fibre of micron thickness, for example, a polymer fibre or a co-polymer fibre. However, different kinds of fibres can be included in the fibre tows, preferably of one or several synthetic materials, even if the method presented here for manufacturing of an air filter does not necessarily have to be applied in connection with a synthetic fibre material but even so can be practised with the use of only natural fibres or with a mix of synthetic fibres and natural fibres.

In a preferred embodiment, the filter body consists of a large number of synthetic fibre tows and synthetic fibres of micron thickness, of substantially uniform extension and length, which randomly laterally connected in an irregular net- and labyrinth-like structure form a large number of flow channels which are maintained by static electric charging of fibres and fibre tows. The filter body may, in this embodiment, be regarded as a hybrid in which both the mechanical and the electrostatical acting properties of the filter are connected.

Without excluding, for that reason, other kinds of fibres or manufacturing processes, one for the object suitable and in the specialized trading commercially available fibre can be mentioned, as an example, a fibre produced by melt blowing, a method which can be defined as a process in which air with a high velocity blows a floating thermoplastic resin from a nozzle during forming of a fine, fibrous and splittably connected fabric or fibre tow. Fibres with a diameter in micron size, typically between 2-4 µm, but also down to diameters less than 2 µm or up to a diameter of 4-10 or 10-15 µm can be manufactured by this method. Such fibre fabrics or fibre tows can also enclose bi- or multiple component fibres of different polymer materials, for example polypropen, polyethen, polystyrene, polycarbonate, Nylon. These fibres, which can be statically electrically charged in advance and thus be supplied in a charged state, have excellent ability to take up and maintain an electric charge for attracting and bind to its surface particles which are transported in the air. Among manufactures of fibres of micron size, which are suitable for air-cleaning treatments, can be mentioned 3M, Eastman Kodak, Kimbery-Clark, Hollingsworth and Vose.

The denomination "micron thickness" such as it is used in this description is to be understood to include at least the above mentioned fibre diameters. In the drawings, fibres, and fibre tows are only schematically disclosed for drawing technical reasons, since neither draw technique or reproduction technique have the ability to reproduce the real number and size of actual fibres.

A production line arranged to realize the elementary production steps during manufacturing of a filter according to the invention is shown schematically in the drawing figures. A driving member has symbolically been indicated therein as a piston/cylinder unit, since it is within reach for a person skilled in the art to optionally use pneumatics, hydraulics or electricity for driving moveable members and transports in the production line.

Consequently, a fibre path 1 is fed in the feeding direction P from a store 2 of fibres, comprising one or several store rollers 3 from which fibre tows 4 are successively unwound in repeated steps the length of which is determined by the axial length of the final filter body. The feeding is intermittently driven by a moveable grip member 5 which is controlled and driven for a to and fro motion between a welding station 6 and a packaging station 7 in manners which are explained more closely below. During the feeding, the fibre tows are guided over pulley wheels 8 at least one of which is stationary and unturnable, and acting to generate or add an electric voltage to the fibres in the fibre path by means of friction and rubbing.

During the feeding, an extension of the original fibre tow/fibre tows are performed in lateral direction, i.e., across the feeding direction P of the fibre path, such that the fibres are formed to a mainly plane fibre path upstream the grip member seen in the feeding direction. The extension of the fibre path is partly produced by its extension over the guide pulleys 8 and partly by the action of a blow member 9 by which compressed air is directed torwards the fibre path by a nozzle 10 controlled and driven for a swinging or a to and fro motion across the feeding direction of the fibre path. By the influence of the compressed air a splitting of the fibre tows is accomplished, which are divided in multifibre tows and individual fibres of substantially uniform extension, and which randomly are laterally connected in an irregular net- and labyrinth-like structure comprising a large number of cavities and channels, which are maintained by static electric charging of fibres and fibre tows. By the influence of jet of the compressed air, the fibre path is supplied further electric charging as a result of friction and by mutual rubbing between fibres and fibre tows during the splitting.

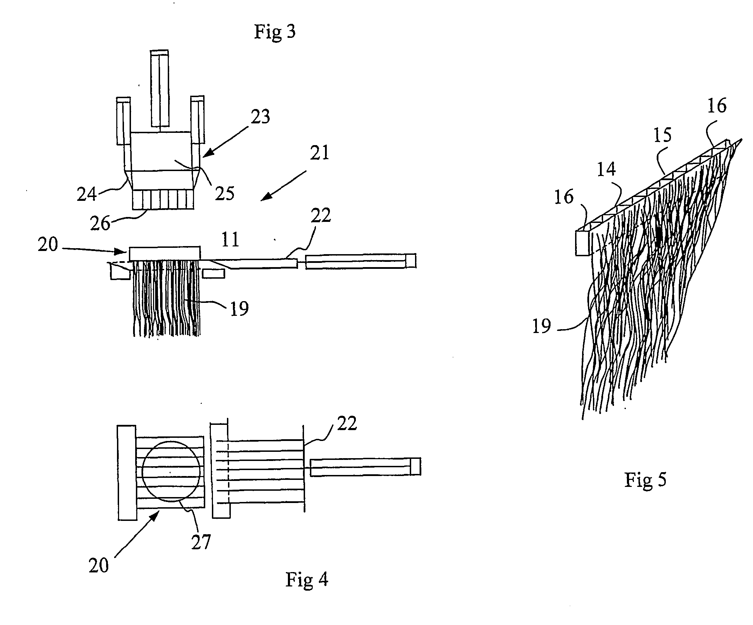

The gripping member 5 is, in the welding station 6, arranged to receive a distance element 11, which is fed piece by piece between the fibre path and a holder-on 13 associated with the welding station 6 from a store 12 provided at the side of the fibre path. The distance element 11, see especially fig. 5, is formed by heat weldable material such as plastic, has elongated shape with a length corresponding to or exceeding the width of the fibre path, and comprising two in parallel running long sides 14 and 15 which are mutually connected by means of transverse walls 16. The walls 16 are suitably, however not necessarily, evenly divided in the length of the distance element and perpendicularly connected to both the long sides. The long sides and the walls of the distance elements delimit individual flow inlets to the filter body in a four sided filter frame formed by packing of distance elements side by side such as explained more closely below. Typically, the distance element 11 can have a length of about 200 mm, a height in the flow direction of about 10 mm, a width of about 5 mm, with a wall thickness below or near the millimeter. The here mentioned measures are naturally only devoted to give the reader an understanding of the proportions of the distance elements, and will be adapted to the actual application by the person skilled in the art.

Further, the welding station 6 is associated with a clamping jaw 17, which is driven and controlled for motion in direction to respectively from the holder-on 13, and more exactly with a force jamming the fibre path to contact with one long side of the distance element whereas its other long side is supported by the holder-on 13. In the jamming position, the clamping jaw is brought to swing with high frequency, within the ultrasonic frequency range. Such swinging can suitably, such as known by the person skilled in the art, be produced by means of piezo electric elements. The kinetic energy of the clamping jaw is transformed by the distance element and the fibre path to heat and results in a fusing or welding together of the fibre path and the distance elements.

Alternatively, the fibres may certainly be attached to the distance element by other forms of heat welding, melting or gluing without abandoning the concept of the invention.

Furthermore, the welding station 6 is provided with a knife 18. The knife 18 may be performed as a rotating or fixed edge, which is movable across the fibre path and along the distance element for cutting of the fibre path at the level of the upper surface of the distance element.

The gripping member 5 is driven for lifting the distance element 11 with attached fibre path to the packing station 7, and unwinds further material from the storing rollers during this motion. The gripping member 5 can for this purpose comprise fixed or movable members such as fingers or shoulders arranged to grip under the distance element or be controllable for engagement with the ends of the distance elements. After the distance element has been delivered in the packing station, the gripping member returns to the welding position for receiving the next distance element, which after welding and cutting of the fibre path is lifted to the packing station. By the cutting of the fibre path, a limited fibre curtain 19 is formed hanging from the distance element 11 delivered in the preceding working operation. The length of this fibre curtain is determined by the lifting height of the gripping member between the welding station and the packing station. After delivering of the later distance element, the previous one is displaced away from the delivering position, suitably during the displacement on a frame supporting the distance element, whereby a filter frame of packed distance elements is formed successively in the packing station.

In the above described manner, a filter frame 20 is formed with a four sided contour with inlet openings defined by the distance elements 11 for an air flow, from which filter frame a assembled filter body extends in the flow direction through the assembled curtains 19. The distance elements included in the four sided filter frame can in suitable manner be fixed mutually for facilitating the handling of future working steps. Such stabilizing of the filter frame can comprise fixing of the ends of the distance elements in the sides of filter frames, such as by means of edge bands which are glued or heat welded against the edges of the filter frame. Alternatively, the sides of the distance element can have formations, such as in each other gripping formations, wherein the distance elements are connected mutually at the packing.

A round filter frame with attached filter body (se fig, 8) consisting of electrically chargeable fibres and fibre tows can in a successive working operation optionally be formed from this four sided filter frame. A preferable solution is shown according to the following for the special problems associated with this productions step.

For this purpose, the four sided filter frame 20 is transferred to a punching station 21, see fig. 3-4, wherein the filter frame is delivered with the fibre curtains hanging from the distance elements. The punching station 21 is associated with a movably arranged holder-on 22 which is driven, during the insertion of the filter frame through the down hanging fibre curtains, to support the filter frame during the punching operation, as well as a punch 23 which is provided with an annular and preferably circular edge 24 punching out a round filter frame from the four sided by a motion directed against the upper side of the filter frame.

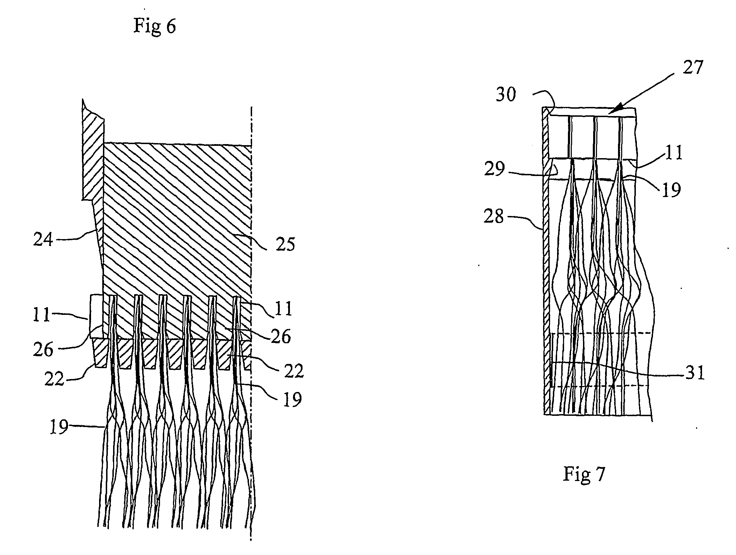

The holder-on 22, se also fig. 6, can be formed as a grate with parallel arms, to the number corresponding to the number of distance elements included in the filter frame. These arms are connected at one of their ends and are with their free ends from the side of the filter frame interjectable under the distance elements in the length direction of these for being received in the spaces which here are formed between the curtains of fibre/fibre tows hanging from the distance elements. However, the holder-on can alternatively also be provided to be arranged across the length direction of the distance elements through the fibre curtains, In such an embodiment, the number of arms can be significantly fewer and comprise a pyramid-shaped cross section (not shown) for smallest possible influence of the fibres. In both the cases, the holder-on can suitably be provided with fixed supports for the undersides of the arms on opposite sides of the filter frame.

Preferably, punching is performed in occurring cases during simultaneous propping of the distance elements included in the future round filter frame against deformation and lateral motions. For this purpose, the punch 23 is configured with a first round part forming a core 25, which in a first step is driven for engagement in the inlet openings of the filter frame, whereafter an annular second part, which is movable in relation to and enclosing the first part and forms the edge 24, is driven in a second step for punching.

Preferably, the first part 25 is formed with a number of projections 26 on its underside, which are insertable with fitting in the inlet openings of the filter frame. The projections 26, see fig. 5-6, are formed for substantially entirely filling the inlet openings in an inserted position but do not necessarily need to be provided in a sufficient number for filling all inlet openings of the filter frame. A sufficient fixing against lateral motions is considered to be reached if all distance elements included in the future round filter frame are gripped by at least one of the projections 26. In order to guarantee that the punching can be performed without deformation caused by shearing in the sides of the distance elements and the walls, it is however preferred, especially if these sides and walls are configured in thin thickness of material and by flexible material, that the projections 26 are formed for filling all inlet openings including the openings which are divided by the edge and are open against the peripheral of the round filter frame. Advantageously, the projections 26 may have the form of fingers with chamfered end edges, such as illustrated in fig. 6.

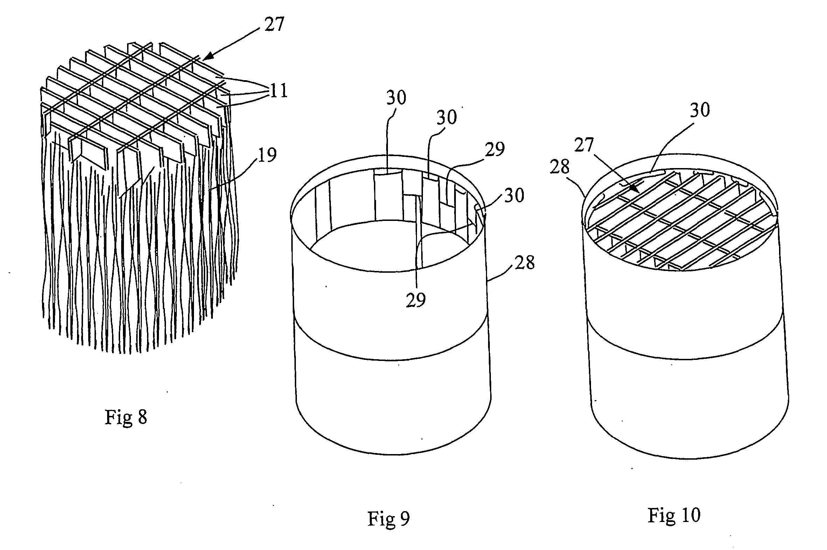

Consequently, the formed round filter frames 27 are thereafter lifted out from the four sided original filter frame and delivered from the punch to an annular casing 28. The included distance elements, connected by engagement of the projections 26, are thereby inserted into the casing 28 which successively occupies the location of the surrounding edge around the peripheral of the round filter frame. The round filter frame 27 and its reception in the casing 28 are shown with reference to the drawing figures 7-10.

The casing 28 extends in a flow direction between an inlet end and an outlet end, In a length at least corresponding to the height of the distance elements and preferably corresponding the length of the filter frame with attached fibre curtains, such that the round filter body in its entirely is enclosed by the casing. Advantageously, the casing 28 may be formed by synthetic material and moulded in one connected tubular piece, which at its inlet end is arranged to enclose the peripheral of the round filter frame for connection of the round filter frame 27.

in a following step, the peripheral of the round filter frame is attached internally in the casing 28. For this purpose, the casing can, on its inside and at a suitable distance from the inlet end, be formed with radially interjected shoulders 29 against which the underside of the filter frame are brought to rest in the inserted position. Closer to the inlet end, and at a distance from the shoulders 29 corresponding to the height of the distance elements, radially inwardly projecting lips 30 are provided on the inside of the casing and active for gripping around the upper side of the filter frame when it has been received between the shoulders and lips for fixing by a snap-in connection. In occurring cases, the fixing of the filter frame can comprise a turning for engagement with locking formations in the inside of the casing, and can also alternatively include gluing or welding, in the latter cases presupposing that the casing is manufactured of a heat weldable material.

Finally, the punch is loosened from the filter frame by drawing the projections 26 out of the inlet openings, which may be done while the distance elements of the filter frame now is fixed in the casing. Alternatively, (not shown) the first part 24 of the punch is arranged, with one or several pushers moveable relatively the projections, which between the projections can be driven out to abutment against the upper edges of the distance elements for pressing the filter frame out of engagement with the projections.

In the above described manner, an air filter is provided, which is characterized by a round filter body with assembled curtains 19 of electrically chargeable fibres of substantially unitary length, which curtains each are carried by a separate distance element 11, which distance elements are commonly punched to a filter frame 27 with round shape from a four sided filter frame 20 of separate distance elements packed together which in a brought together state define the inlet openings for an air flow directed against the filter.

The filter body can, according to the above, be enclosed in a surrounding, channel shaped casing, wherein the peripherally located fibres and fibre tows of the filter body are attached to the inside of the casing to guarantee mechanically as well as electrically that the filter body fills the cross-section area of the casing, also when the filter is applied in a horizontally orientated air flow. Said attachment is indicated in Fig 7 with the reference 31 and can be realised by means of a suitable glue and a double-faced tape. The inner surface of the casing can, for example, be provided with one or several glue strings on suitable places inside the filter frame with attached filter body mounted inside the casing. Alternatively, the fibres may be attached against the internal surface of the tubular element 28 by means of a weld joint. The fibres in said peripheral portion of the filter body are attached against the tubular element in a position 31 which is located more closely to the downstream located position of the fibres than the fastening position of the fibres in the filter frame 20 such that the filter body also at its lower end is prevented to collapse.

The invention is not in any way restricted to the embodiment described on the drawing but may be varied freely within the frames of the claims.

An obvious modification comprises, for example, other cross section shapes of the filter body and the casing than the round one shown above, especially four sided cross sections such as square or rectangular, but also other polygon-shaped cross sections with sharp or rounded corners.

## Claims

1. An air filter to be mounted in a horizontally oriented air-channel, which comprises a filter frame (20) with passages for air, which is adapted to be attached inside a channel-shaped element (28), and a filter body, which comprises electrostatically chargeable fibres which are attached to the filter frame (20) such that the filter body obtains an extension from the filter frame (20) to a position located at a distance from and downstream of the filter frame (20) with respect to the intended flow direction of the air through the air filter, **characterized in that** the air filter comprises attachment means (31) which are adapted to attach fibres at at least one peripheral portion of the filter body against a wall surface of the channel-shaped element (28) in a position which is located nearer the downstream position of the filter body than the attachment position of the filter body in the filter frame (20).

2. An air filter according to claim 1, **characterized in that** said attachment means comprises a double-faced tape (31).

3. An air filter according to claim 1, **characterized in that** said attachment means comprises a glue.

4. An air filter according to claim 1, **characterized in that** said attachment means comprises a weld joint.

5. An air filter according to claim 4, **characterized in that** said filter body comprises fibres with a substantially uniform length.

6. An air filter according to any one of the preceding claims, **characterized in that** the channel-shaped element is a channel-shaped casing (28) which consists of a part of the air filter.

7. An air filter according to claim 6, **characterized in that** the channel-shaped casing (28) has an extension from an air inlet to an air outlet which at least corresponds to the total extension of the filter frame (20) and the filter body in the intended flow direction of the air.

8. An air filter according to any one of the preceding claims, **characterized in that** the filter frame (20) is formed by a plurality side by side mounted elongated distance elements (11).

9. An air filter according to any one of the preceding claims, **characterized in that** the filter frame (20) has a substantially round contour shape **in that** two peripheral and diametrically opposite distance elements (11) are shorter than the remaining distance elements (11) and that the side by side mounted distance elements (11) have a length which increases successively in direction towards the centre of the filter frame (20).

10. A method for manufacturing of an air filter to be mounted in a horizontally oriented air-channel, wherein the method comprises the step of attaching electrostatically chargeable fibres to a filter frame (20) such that the filter body of fibres is formed which has an extension from the filter frame (20) to a position located at a distance from and downstream the filter body (20) with respect to the intended flow direction of the air through the air filter, and attaching the filter frame (20) inside a channel-shaped element (28), **characterized by** the steps of attaching fibres which are located at at least a peripheral portion of the filter body against an inner surface of the channel-shaped element (28) by an attachment means in a position which is located nearer the downstream position of the filter body than the attachment position (31) of the filter body in the filter frame (20).

11. A method according to claims 10, **characterized by** the step of attaching fibres against the inner surface of the channel-shaped element (28) by means of an attachment means in the form of a double-faced tape (31).

12. A method according to claims 10, **characterized by** the step of attaching fibres against the inner surface of the channel-shaped element (28) by means of an attachment means in the form of a glue.

13. A method according to claims 10, **characterized by** the step of attaching fibres against the inner surface of the channel-shaped element (28) by an attachment means in the form of a weld joint.

14. A method according to any one of the preceding claims 10-13, **characterized by** the step of providing the filter body with fibres of a substantially uniform length.

15. A method according to any one of the preceding claims 10-14, **characterized by** the step of attaching the filter body (20) in a channel-shaped element in the form of a channel-shaped casing (28) which consists of a part of the air filter.

16. A method according to claim 15, **characterized by** the steps of attaching the filter frame (20) in a channel-shaped casing (28) which has an extension which at least corresponds to the total extension of the filter frame (20) and the filter body in the flow direction of the air.

17. A method according to any one of the preceding claims 10-16, **characterized by** the step of forming the filter frame (20) of a plurality side by side mounted elongated distance elements (11).

18. A method according to claim 17, **characterized by** the step of giving the filter frame (20) a substantially round contour shape by providing the filter frame (20) with two peripheral and diametrically opposite distance elements (11) which are shorter than the remaining distance elements (11) and that the side by side mounted distance elements (11) have a length which increases successively in direction towards the centre of the filter frame (20).

## Patentansprüche

1. Luftfilter zum Einbau in einen horizontal ausgerichteten Luftkanal, wobei der Luftfilter einen Filterrahmen (20) mit Durchgängen für Luft, welcher zur Anbringung innerhalb eines kanalförmigen Elementes (28) ausgebildet ist, und einen Filterkörper umfasst, welcher elektrostatisch aufladbare Fasern aufweist, die so an dem Filterrahmen (20) angebracht sind, dass der Filterkörper eine Verlängerung von dem Filterrahmen (20) bis zu einer Position erhält, die in einem Abstand von dem Filterrahmen (20) und stromabwärts von dem Filterrahmen (20) in Bezug auf die vorgesehene Strömungsrichtung der Luft durch den Luftfilter angeordnet ist, **dadurch gekennzeichnet, dass** der Luftfilter Befestigungsmittel (31) aufweist, welche dazu ausgebildet sind, Fasern an mindestens einem Umfangsabschnitt des Filterkörpers an einer Wandoberfläche des kanalförmigen Elementes (28) in einer Position anzubringen, welche näher an der stromabwärts gelegenen Position des Filterkörpers als an der Befestigungsposition des Filterkörpers in dem Filterrahmen (20) angeordnet ist.

2. Luftfilter nach Anspruch 1, **dadurch gekennzeichnet, dass** die Befestigungsmittel ein doppelseitiges Klebeband (31) aufweisen.

3. Luftfilter nach Anspruch 1, **dadurch gekennzeichnet, dass** die Befestigungsmittel einen Kleber aufweisen.

4. Luftfilter nach Anspruch 1, **dadurch gekennzeichnet, dass** die Befestigungsmittel eine Schweißverbindung aufweisen.

5. Luftfilter Anspruch 4, **dadurch gekennzeichnet, dass** der Filterkörper Fasern mit einer im Wesentlichen einheitlichen Länge aufweist.

6. Luftfilter nach einem der vorhergehenden Ansprüche, **dadurch gekennzeichnet, dass** das kanalförmige Element ein kanalförmiges Gehäuse (28) ist, welches aus einem Teil des Luftfilters besteht.

7. Luftfilter nach Anspruch 6, **dadurch gekennzeichnet, dass** das kanalförmige Gehäuse (28) eine Verlängerung von einem Lufteinlass zu einem Luftauslass besitzt, welcher mindestens mit der gesamten Verlängerung des Filterrahmens (20) und des Filterkörpers in der vorgesehenen Strömungsrichtung der Luft korrespondiert.

8. Luftfilter nach einem der vorhergehenden Ansprüche, **dadurch gekennzeichnet, dass** der Filterrahmen (20) aus einer Vielzahl von nebeneinander montierten verlängerten Abstandselementen (11) gebildet ist.

9. Luftfilter nach einem der vorhergehenden Ansprüche, **dadurch gekennzeichnet, dass** der Filterrahmen (20) eine im Wesentlichen runde Konturform aufweist, wobei zwei umfänglich und diametral gegenüber liegenden Abstandselemente (11) kürzer als die verbleibenden Abstandselemente (11) sind, und dass die nebeneinander montierten Abstandselemente (11) eine Länge aufweisen, die nacheinander in Richtung auf das Zentrum des Filterrahmens (20) hin zunimmt.

10. Verfahren zum Herstellen eines Luftfilters zum Einbau in einen horizontal ausgerichteten Luftkanal, wobei das Verfahren den Verfahrensschritt Anbringen von elektrostatisch aufladbaren Fasern an einem Filterrahmen (20) aufweist, derart, dass der Filterkörper aus Fasern gebildet wird, der eine Verlängerung von dem Filterrahmen (20) bis zu einer Position aufweist, die in einem Abstand von dem Filterkörper (20) und stromabwärts von diesem in Bezug auf die vorgesehene Strömungsrichtung der Luft durch den Luftfilter angeordnet ist, und Anbringen des Filterrahmens (20) innerhalb eines kanalförmigen Elementes (28), **gekennzeichnet durch** die Verfahrensschritte Anbringen von Fasern, welche an mindestens einem Umfangsabschnitt des Filterkörpers an einer Wandoberfläche des kanalförmigen Elementes (28) angeordnet werden, **durch** ein Befestigungsmittel in einer Position, welche näher an der stromabwärts gelegenen Position des Filterkörpers als an der Befestigungsposition (31) des Filterkörpers in dem Filterrahmen (20) angeordnet ist.

11. Verfahren nach Anspruch 10, **gekennzeichnet durch** den Verfahrensschritt Anbringen von Fasern an der inneren Oberfläche des kanalförmigen Elementes (28) mittels eines Befestigungsmittels in der Gestalt eines doppelseitigen Klebebands (31).

12. Verfahren nach Anspruch 10, **gekennzeichnet durch** den Verfahrensschritt Anbringen von Fasern an der inneren Oberfläche des kanalförmigen Elementes (28) mittels eines Befestigungsmittels in der Gestalt eines Klebers.

13. Verfahren nach Anspruch 10, **gekennzeichnet durch** den Verfahrensschritt Anbringen von Fasern an der inneren Oberfläche des kanalförmigen Elementes (28) mittels eines Befestigungsmittels in der Gestalt einer Schweißverbindung.

14. Verfahren nach einem der Ansprüche 10 bis 13, **gekennzeichnet durch** den Verfahrensschritt Bereitstellen des Filterkörpers mit Fasern einer im Wesentlichen gleichmäßigen Länge.

15. Verfahren nach einem der Ansprüche 10 bis 14, **gekennzeichnet durch** den Verfahrensschritt Anbringen des Filterkörpers (20) in einem kanalförmigen Element in der Gestalt eines kanalförmigen Gehäuses (28), welches aus einem Teil des Luftfilters besteht.

16. Verfahren nach Anspruch 15, **gekennzeichnet durch** die Verfahrensschritte Anbringen des Filterrahmens (20) in einem kanalförmigen Gehäuse (28), welches eine Verlängerung aufweist, die mindestens mit der gesamten Verlängerung des Filterrahmens (20) und des Filterkörpers in der Strömungsrichtung der Luft korrespondiert.

17. Verfahren nach einem der Ansprüche 10 bis 16, **gekennzeichnet durch** den Verfahrensschritt Bilden des Filterrahmens (20) aus einer Vielzahl von nebeneinander montierten verlängerten Abstandselementen (11).

18. Verfahren nach Anspruch 17, **gekennzeichnet durch** den Verfahrensschritt Versehen des Filterrahmens (20) mit einer im Wesentlichen runden Konturform, indem der Filterrahmen (20) mit zwei umfänglich und diametral gegenüber liegenden Abstandselemente (11) versehen wird, die kürzer als die verbleibenden Abstandselemente (11) sind, und dass die nebeneinander montierten Abstandselemente (11) eine Länge aufweisen, die nacheinander in Richtung auf das Zentrum des Filterrahmens (20) hin zunimmt.

## Revendications

1. Filtre à air à monter dans un canal d'air orienté horizontalement, qui comprend un cadre de filtre (20) ayant des passages pour l'air, qui est adapté pour être fixé à l'intérieur d'un élément en forme de canal (28), et un corps de filtre, qui comprend des fibres pouvant être chargées électrostatiquement qui sont fixées sur le cadre de filtre (20) de sorte que le corps de filtre obtienne une extension allant du cadre de filtre (20) jusqu'à une position située à une distance du cadre de filtre (20) et en aval de celui-ci par rapport à la direction attendue d'écoulement de l'air à travers le filtre à air, **caractérisé en ce que** le filtre à air comprend un moyen de fixation (31) qui est adapté pour fixer les fibres dans au moins une portion périphérique du corps de filtre contre une surface de paroi de l'élément en forme de canal (28) dans une position qui se trouve plus près de la position aval du corps de filtre que de la position de fixation du corps de filtre dans le cadre de filtre (20).

2. Filtre à air selon la revendication 1, **caractérisé en ce que** ledit moyen de fixation comprend une bande double face (31).

3. Filtre à air selon la revendication 1, **caractérisé en ce que** ledit moyen de fixation comprend une colle.

4. Filtre à air selon la revendication 1, **caractérisé en ce que** ledit moyen de fixation comprend un joint soudé.

5. Filtre à air selon la revendication 4, **caractérisé en ce que** ledit corps de filtre comprend des fibres ayant une longueur sensiblement uniforme.

6. Filtre à air selon l'une quelconque des revendications précédentes, **caractérisé en ce que** l'élément en forme de canal est un tubage en forme de canal (28) qui se compose d'une partie du filtre à air.

7. Filtre à air selon la revendication 6, **caractérisé en ce que** le tubage en forme de canal (28) a une extension allant d'une admission d'air jusqu'à une sortie d'air qui correspond au moins à l'extension totale du cadre de filtre (20) et du corps de filtre dans la direction attendue d'écoulement de l'air.

8. Filtre à air selon l'une quelconque des revendications précédentes, **caractérisé en ce que** le cadre de filtre (20) est formé d'une pluralité d'éléments d'écartement allongés montés côte à côte (11).

9. Filtre à air selon l'une quelconque des revendications précédentes, **caractérisé en ce que** le cadre de filtre (20) a une forme au contour sensiblement arrondi dans laquelle deux éléments d'écartement périphériques et diamétralement opposés (11) sont plus courts que les autres éléments d'écartement (11) et dans laquelle les éléments d'écartement montés côte à côte (11) ont une longueur qui augmente progressivement en direction du centre du cadre de filtre (20).

10. Procédé de fabrication d'un filtre à air à monter dans un canal d'air orienté horizontalement, dans lequel le procédé comprend l'étape consistant à fixer des fibres pouvant être chargées électrostatiquement sur un cadre de filtre (20) de sorte que le corps de filtre des fibres soit formé et présente une extension allant du cadre de filtre (20) jusqu'à une position située à une distance du cadre de filtre (20) et en aval de celui-ci par rapport à la direction attendue d'écoulement de l'air à travers le filtre à air, et l'étape consistant à fixer le cadre de filtre (20) à l'intérieur d'un élément en forme de canal (28), **caractérisé par** les étapes consistant à fixer des fibres qui se trouvent dans au moins une portion périphérique du corps de filtre contre une surface intérieure de l'élément en forme de canal (28) à l'aide d'un moyen de fixation dans une position qui se trouve plus près de la position aval du corps de filtre que de la position de fixation (31) du corps de filtre dans le cadre de filtre (20).

11. Procédé selon la revendication 10, **caractérisé par** l'étape consistant à fixer des fibres contre la surface intérieure de l'élément en forme de canal (28) à l'aide d'un moyen de fixation ayant la forme d'une bande double face (31).

12. Procédé selon la revendication 10, **caractérisé par** l'étape consistant à fixer des fibres contre la surface intérieure de l'élément en forme de canal (28) à l'aide d'un moyen de fixation ayant la forme d'une colle.

13. Procédé selon la revendication 10, **caractérisé par** l'étape consistant à fixer des fibres contre la surface intérieure de l'élément en forme de canal (28) à l'aide d'un moyen de fixation ayant la forme d'un joint soudé.

14. Procédé selon l'une quelconque des revendications précédentes 10 à 13, **caractérisé par** l'étape consistant à munir le corps de filtre de fibres ayant une longueur sensiblement uniforme.

15. Procédé selon l'une quelconque des revendications précédentes 10 à 14, **caractérisé par** l'étape consistant à fixer le cadre de filtre (20) dans un élément en forme de canal ayant la forme d'un tubage en forme de canal (28) qui se compose d'une partie du filtre à air.

16. Procédé selon la revendication 15, **caractérisé par** les étapes consistant à fixer le cadre de filtre (20) dans un tubage en forme de canal (28) qui a une extension qui correspond au moins à l'extension totale du cadre de filtre (20) et du corps de filtre dans la direction attendue d'écoulement de l'air.

17. Procédé selon l'une quelconque des revendications précédentes 10 à 16, **caractérisé par** l'étape consistant à former le cadre de filtre (20) d'une pluralité d'éléments d'écartement allongés montés côte à côte (11).

18. Procédé selon la revendication 17, **caractérisé par** l'étape consistant à donner au cadre de filtre (20) une forme au contour sensiblement arrondi en munissant le cadre de filtre (20) de deux éléments d'écartement périphériques et diamétralement opposés (11) qui sont plus courts que les autres éléments d'écartement (11) et en faisant en sorte que les éléments d'écartement montés côte à côte (11) aient une longueur qui augmente progressivement en direction du centre du cadre de filtre (20).
